# FASCICULE DE BREVET EUROPEEN

(11) **EP 3 213 028 B1**
(45) Date de publication et mention de la délivrance du brevet: **12.09.2018**
(21) Numéro de dépôt: 15787985.9
(22) Date de dépôt: 28.10.2015
(51) Int. Cl.: G01B 7/14

(54) **PROCÉDÉ DE MESURE DES JEUX ENTRE DES ZONES DE TUBES ET ENSEMBLE DE MESURE DES JEUX ASSOCIÉ**
VERFAHREN ZUR MESSUNG DES ABSTANDS ZWISCHEN ROHRZONEN UND ZUGEHÖRIGE ABSTANDSMESSANORDNUNG
METHOD FOR MEASURING CLEARANCES BETWEEN TUBE ZONES AND ASSOCIATED CLEARANCE-MEASUREMENT ASSEMBLY

(30) Priorité: 29.10.2014 FR 1460400
(43) Date de publication de la demande: 06.09.2017
(73) Titulaire: FRAMATOME, 92400 Courbevoie (FR)
(72) Inventeur: PIRIOU, Marc, F-71100 Chalon sur Saône (FR); BOURGOIS, Stéphane, F-71510 Aluze (FR); SARTRE, Bernard, F-71100 Saint-Rémy (FR); KERNIN, Yann, F-71390 Granges (FR)
(74) Mandataire: Lavoix
(86) Numéro de dépôt international: PCT/EP2015/075029
(87) Numéro de publication internationale: WO 2016/066709

(56) Documents cités:
- FR-A1- 2 702 840
- US-A- 4 704 577
- US-A- 5 744 952

## Description

La présente invention concerne un procédé de mesure des jeux entre des zones de tubes d'échanges de chaleur d'un échangeur de chaleur, comprenant les étapes suivantes :
- engager dans ladite zone d'un premier tube un chapelet de sources émettrices ;
- faire circuler dans ladite zone d'un second tube un détecteur récepteur ;
- enregistrer le signal recueilli par le détecteur récepteur pendant qu'il parcourt ladite zone du second tube ;
- estimer l'écartement entre les zones respectives des premier et second tubes à partir du signal enregistré.

Ce procédé est destiné à contrôler les cotes dimensionnelles et à évaluer l'intégrité des structures mécaniques de l'échangeur de chaleur après sa fabrication ou après une période de service.

Un tel procédé est apte à réaliser une mesure des jeux entre cintres de faisceaux tubulaires d'un générateur de vapeur au stade final de fabrication ou en service, en y associant une incertitude. Cette mesure révèle les défauts de fabrication ou d'exploitation. L'ensemble propre à réaliser les mesures est utilisé comme un outil de contrôle non destructif.

Le procédé de mesure des jeux entre des zones de tubes d'échanges de chaleur d'un échangeur de chaleur est classiquement réalisé par un contrôle non destructif de type palpeur ou par une méthode visuelle, mesurant les distances entre les tubes depuis une surface extérieure du tube de référence.

Cette méthode de mesure réalisée depuis la surface extérieure du tube est difficilement adaptable pour des tubes de générateur de vapeur. Or, pour un générateur de vapeur, la surface extérieure des tubes de l'ensemble des faisceaux tubulaires est difficilement accessible. Les mesures réalisées sont donc imparfaites. De plus, les opérations sont fastidieuses par cette méthode.

Pour faciliter le procédé de mesure des jeux entre tubes, des solutions ont été développées permettant d'introduire un ensemble de mesure de jeux dans des zones de tubes d'échanges de chaleur.

US 5 744 952 décrit un procédé de mesure des jeux entre deux tubes droits d'un échangeur de chaleur comprenant un noyau de ferrite avec une haute perméabilité magnétique dans un premier tube et une bobine à courants de Foucault dans un second tube. La mesure réalisée avec la bobine permet de déterminer la distance la séparant jusqu'au noyau de ferrite.

Toutefois, le procédé de mesure des jeux entre des zones de tube d'échanges de chaleur de l'échangeur de chaleur ne donne pas entièrement satisfaction. Le procédé de mesure est imprécis pour des cintres tubulaires d'un générateur de vapeur.

Un but de l'invention est de proposer un procédé de mesure des jeux entre des zones de tubes cintrées de faisceaux tubulaires d'échangeur de chaleur, au stade final de fabrication ou en service.

A cet effet, l'invention a pour objet, selon la revendication indépendante 1, un procédé de mesure des jeux entre deux zones de tubes d'échanges de chaleur d'un échangeur de chaleur du type précité dans lequel lesdites zones sont des cintres agencés de telle sorte que ladite zone du cintre du premier tube s'étende en vis-à-vis de ladite zone du cintre du second tube, deux extrémités opposées du chapelet de sources émettrices étant sollicitées de manière à immobiliser le chapelet de sources émettrices dans le cintre du premier tube pendant la circulation du détecteur récepteur dans le cintre du second tube.

Le procédé selon l'invention peut comprendre l'une ou plusieurs des caractéristiques suivantes prises isolément ou suivant toute combinaison techniquement possible :
- lesdites zones des cintres des premier et second tubes s'étendent dans un même plan et sont sensiblement parallèles les unes aux autres ;
- le chapelet de sources émettrices est positionné de manière à plaquer le chapelet de sources émettrices contre un intrados du cintre du premier tube ;
- le chapelet de sources émettrices comprend des centreurs et le chapelet de sources émettrices est positionné de manière à centrer le chapelet de sources émettrices dans le cintre du premier tube ;
- l'étape d'engagement du chapelet de sources émettrices dans la zone du premier tube comprend les opérations suivantes :
   - introduire le détecteur récepteur jusqu'à une entrée de la zone du cintre du second tube,
   - introduire le chapelet de sources émettrices dans le premier tube,
   - déplacer le chapelet jusqu'à détecter une première source émettrice devant le détecteur récepteur,
   - déplacer le chapelet jusqu'à détecter une dernière source émettrice devant le détecteur récepteur,
   - solliciter le chapelet pour l'immobiliser dans le premier tube ;
- l'étape d'enregistrement du signal recueilli par le détecteur récepteur pendant qu'il parcourt ladite zone du second tube comprend une opération de mesure d'un signal comprenant une donnée physique permettant de calculer la distance entre la source émettrice et le détecteur récepteur et une donnée déductible de l'analyse des données physiques pour distinguer les sources émettrices détectées ;
- l'étape d'enregistrement du signal comprend une opération reproduite et répétitive d'acquisition de mesures du signal, en effectuant préférentiellement au moins une acquisition de mesure par mm parcouru ;
- le chapelet de sources émettrices comprend une pluralité de sources émettrices de forme identique, espacées d'une distance suffisante pour que la donnée physique émise par l'une des sources émettrices n'interfère pas avec la donnée physique émise par l'autre des sources émettrices lors de l'opération de mesure du signal ;
- chaque source émettrice est composée d'un alliage de néodyme fer bore ou de tout autre matériau conducteur d'électricité ou de tout autre matériau magnétique ;
- le chapelet de sources émettrices comprend un filament reliant les sources émettrices ;
- l'étape de circulation du détecteur récepteur dans ladite zone du second tube comprend une opération de déplacement du détecteur récepteur à vitesse sensiblement constante dans le second tube ;
- le détecteur récepteur comprend une partie active avec un capteur de type sonde de mesure de courants de Foucault ou un capteur du type sonde de mesure du flux de fuite ;
- le détecteur récepteur comprend une partie guidage et centrage du détecteur récepteur par rapport au cintre du second tube ;
- les cintres des premier et second tubes sont dans un plan vertical, le cintre du premier tube se trouvant au-dessus ou en-dessous du second tube.

L'invention a également pour objet, selon la revendication indépendante 15, un ensemble de mesure des jeux entre des zones des tubes de chaleur d'un échangeur de chaleur. L'ensemble de mesure des jeux entre des zones des tubes comprend un chapelet de sources émettrices propre à être engagé dans une zone d'un cintre d'un premier tube, un détecteur récepteur propre à recevoir un signal transmis par le chapelet de sources émettrices lors d'un parcours d'une zone d'un cintre d'un second tube, la zone du cintre du premier tube s'étendant en vis-à-vis de la zone du cintre du second tube, et un moyen de déplacement et de maintien en position du chapelet de sources émettrices et du détecteur récepteur, propre à solliciter deux extrémités opposées du chapelet de sources émettrices de manière à l'immobiliser dans le cintre du premier tube pendant la circulation du détecteur récepteur dans le cintre du second tube.

L'ensemble de mesure des jeux selon l'invention peut comprendre l'une ou plusieurs des caractéristiques suivantes prises isolément ou suivant toute combinaison techniquement possible :
- le chapelet comprend une pluralité de sources émettrices de forme identique, les sources émettrices étant émettrices d'un signal comportant une donnée physique permettant de calculer la distance entre la source émettrice et le détecteur récepteur et une donnée déductible de l'analyse des données physiques pour distinguer les sources émettrices détectées, espacées d'une distance suffisante pour que la donnée physique émise par l'une des sources émettrices n'interfère pas avec la donnée physique émise par l'autre des sources émettrices, les sources émettrices étant avantageusement reliées par un filament et avantageusement positionnées sur l'intrados ou au centre du premier tube au moyen d'un centreur ;
- le détecteur récepteur comprend une partie active comprenant un capteur de type sonde de mesure de courant de Foucault ou du type sonde de mesure du flux de fuite ;
- le détecteur récepteur comprend une partie guidage et centrage s'adaptant au diamètre du second tube.

L'invention sera mieux comprise à la lecture de la description qui va suivre donnée uniquement à titre d'exemple et faite en se référant aux dessins annexés sur lesquels :
- la figure 1 est une vue globale et schématique d'un échangeur de chaleur, notamment de la zone destiné à être contrôlée par le procédé selon l'invention,
- la figure 2 est une vue globale de côté, schématique et prise en coupe d'un ensemble de mesure des jeux entre des zones de tubes d'échanges de chaleur d'un échangeur de chaleur selon l'invention, et
- la figure 3 est une vue globale de face d'un chapelet de sources émettrices de l'ensemble de mesure des jeux de la figure 2.

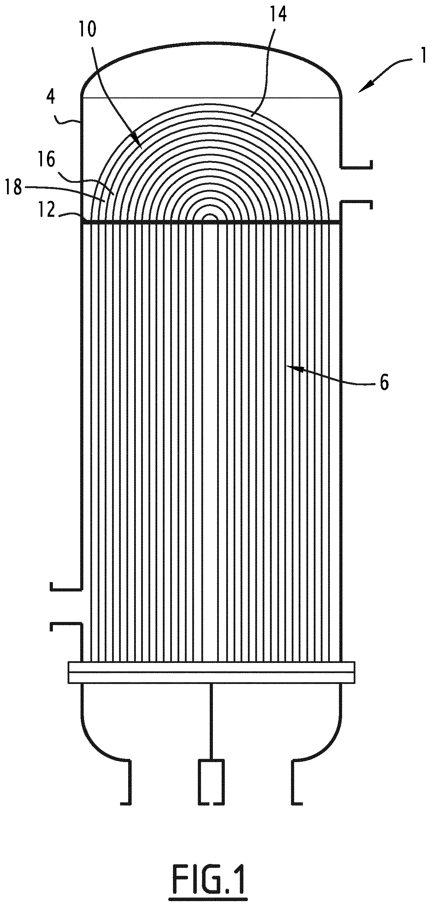

Un échangeur de chaleur 1 de type générateur de vapeur est représenté sur la figure 1.

Il comprend une cuve 4 et une pluralité de faisceaux tubulaires 6 disposés dans la cuve 4. Chaque faisceau 6 comporte un grand nombre de tube en forme de U, ces tubes ayant une partie droite et à chacune de leur extrémité, un cintre 10.

Les cintres 10 sont agencés, au moyen d'entretoises 12 disposées notamment aux extrémités des parties droites des tubes, pour que le cintre d'un premier tube 14 s'étende en vis-à-vis du cintre d'un second tube 16. Le cintre du premier tube 14 et le cintre du second tube 16 définissent entre eux un espacement 18.

Les cintres des premier et second tubes 14, 16 s'étendent dans un même plan et sont sensiblement parallèles les uns aux autres.

Conformément au mode de réalisation illustré sur la figure 1, les cintres des premier et second tubes 14, 16 s'étendent dans un même plan vertical. Le cintre du premier tube 14 se trouve avantageusement au-dessus du cintre du second tube 16. En variante, les cintres des premier et second tubes 14, 16 s'étendent suivant un même plan ayant une composante horizontale et/ou une composante verticale.

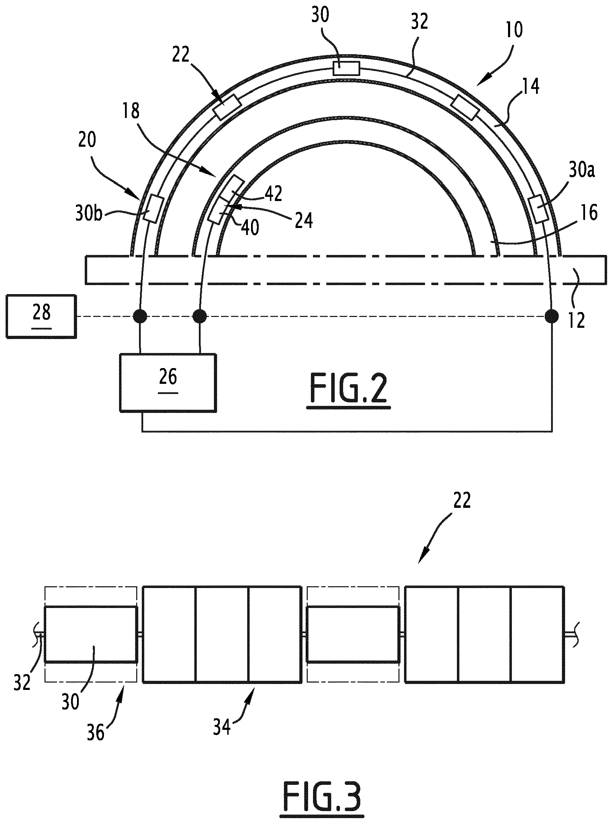

Comme illustré sur la figure 2, un ensemble de mesure 20 est destiné à réaliser un contrôle non destructif, pour contrôler le jeu entre les cintres des premier et second tubes 14, 16 notamment à un stade final de fabrication ou en service.

L'ensemble de mesure 20 des jeux comprend un chapelet 22 de sources émettrices destiné à être engagé dans le premier tube 14, un détecteur récepteur 24 destiné à circuler dans le second tube 16 et des moyens de déplacement et de maintien en position 26 du chapelet 22 et du détecteur récepteur 24.

L'ensemble de mesure 20 des jeux comprend également une unité de contrôle 28 destinée à enregistrer le signal reçu par le détecteur récepteur 24 lors de l'acquisition des mesures du jeu entre le premier tube 14 et le second tube 16. L'unité de contrôle 28 est également apte à calculer la distance entre le chapelet 22 de sources émettrices et le détecteur récepteur 24 en évaluant la distance par la décroissance de l'intensité d'une donnée physique émise.

Comme illustré sur la figure 3, le chapelet 22 de sources émettrices comprend une pluralité de sources émettrices 30 sensiblement identiques, espacées entre elles. Le chapelet 22 de sources émettrices comprend également un filament 32 liant les sources émettrices 30, et un espaceur 34 entre chaque paire de sources émettrices 30 voisine le long du filament, transparent préférentiellement au champ magnétique. L'écartement entre les sources émettrices 30 est tel que l'influence d'une source sur l'autre est considérée comme négligeable.

Avantageusement, les espaceurs 34 sont de forme cylindrique, typiquement arrondie, et divisés en plusieurs pièces liées les uns aux autres, par exemple articulés les uns aux autres. L'espaceur 34 est apte à suivre le contour du cintre, sans se coincer à l'intérieur, et à prépositionner la paire de sources émettrices 30 maintenues au filament 32 pour conserver une distance fixe entre les sources émettrices 30.

En variante, le chapelet 22 de sources émettrices comprend des centreurs 36 propre à positionner le chapelet 22 de sources émettrices par rapport au cintre du premier tube 14. Le centreur 36 présente un logement s'adaptant au contour de la source émettrice 30 ou/et de l'espaceur 34. Le centreur 36 est propre à positionner la source émettrice 30 contre un intrados du cintre du premier tube 14. En variante, le centreur 36 est propre à positionner la source émettrice 30 au centre du cintre du premier tube 14.

Chaque source émettrice 30 émet un signal pouvant être recueilli par le détecteur récepteur 24. Le signal comprend une donnée physique propre à permettre à l'unité de contrôle 28 de calculer l'espacement entre la source émettrice 30 et le détecteur récepteur 24 et une donnée déductible de l'analyse des données physiques pour distinguer les sources émettrices 30 détectées.

Le détecteur récepteur 24 est apte à mesurer le signal émis par chaque source émettrice 30 et s'étend dans le second tube 16 comme illustré sur la figure 2.

Le détecteur récepteur 24 est avantageusement positionné en vis-à-vis du premier tube 14.

Le détecteur récepteur 24 comprend une partie guidage et centrage 40 du détecteur par rapport au cintre du second tube 16 et une partie active 42 comprenant un capteur de mesure du signal.

Le détecteur récepteur 24 est relié au moyen de déplacement 26, avantageusement par la partie guidage et centrage 40.

La partie guidage et centrage 40 du détecteur récepteur comprend une enveloppe, avantageusement de forme cylindrique, s'ajustant au contour intérieur du cintre du second tube 16.

Le moyen de déplacement et de maintien en position 26 est apte à faire circuler le détecteur récepteur 24 dans le cintre du second tube 16 à une vitesse sensiblement constante. Autrement dit, la variation de la vitesse due notamment au frottement, a un ordre de grandeur de ± 10 % de la vitesse constante.

Le moyen de déplacement et de maintien en position 26 est également apte à déplacer le chapelet 22 de sources émettrices dans le premier tube 14 et à le maintenir en position.

Le moyen de déplacement et de maintien en position 26 est apte à positionner une première extrémité du chapelet 22 dans le premier tube 14, et à la faire circuler au moins jusqu'à ce que cette extrémité sorte du cintre du premier tube 14. La première extrémité du chapelet 22 est, en outre, adaptée pour être réengagée dans le moyen de déplacement et de maintien en position 26.

En variante, le moyen de déplacement et de maintien en position 26 est apte à faire circuler une première partie de chapelet de type guide dans le premier tube 14, pour y insérer progressivement une seconde partie de chapelet 22 de sources émettrices.

Le moyen de déplacement et de maintien en position 26 est propre à placer le chapelet 22 de sources émettrices dans la partie droite et/ou dans le cintre du premier tube 14.

Comme illustré sur la figure 2, le moyen de déplacement et de maintien en position 26 comprend un moyen d'immobilisation propre à recevoir les deux extrémités du chapelet 22 et à manoeuvrer chacune des extrémités pour immobiliser le chapelet 22 dans le premier tube 14.

Le moyen de déplacement et de maintien en position 26 est propre à solliciter les deux extrémités opposées du chapelet 22 et à l'immobiliser dans le cintre du premier tube 14 pendant la circulation du détecteur récepteur 24 dans le cintre du second tube 16.

En variante, le moyen de déplacement et de maintien en position 26 comprend un moyen de blocage en position de l'une des extrémités du chapelet 22 de sources émettrices et un moyen d'immobilisation de l'autre extrémité du chapelet 22 de sources émettrices, quand le chapelet 22 est engagé dans le cintre du premier tube 14.

Le moyen de déplacement et de maintien en position 26 est propre à immobiliser l'une des extrémités du chapelet 22 de sources émettrices et à solliciter l'autre des extrémités opposées du chapelet 22 de manière à positionner et à immobiliser le chapelet 22 de sources émettrices dans le cintre du premier tube 14 notamment pendant la circulation du détecteur récepteur 24 dans le cintre du second tube 16.

Le moyen de déplacement et de maintien en position 26 comprend avantageusement un organe du type pousseur-tireur pour déplacer le chapelet 22 et un organe de type pousseur-tireur pour le détecteur récepteur 24.

Le procédé de mesure des jeux entre des zones de tube d'échange de chaleur d'un échangeur de chaleur 1 va maintenant être décrit.

Comme illustré sur la figure 2, le procédé comporte les étapes suivantes.

Initialement, on engage le chapelet 22 de sources émettrices dans le premier tube 14. Le détecteur récepteur 24 est déplacé dans le second tube 16 par le moyen de déplacement 26. L'unité de contrôle 28 enregistre le signal recueilli par la partie active 42 du détecteur lors du parcours de la zone du second tube 16. L'unité de contrôle 28 estime l'écartement ou le jeu entre les zones respectives des premier et second tubes 14, 16 à partir du signal enregistré.

Ces différentes étapes vont maintenant être détaillées.

Tout d'abord, le détecteur récepteur 24 est déplacé jusqu'à une entrée du cintre du second tube 16, signalée par une entretoise 12 détectable. Le détecteur récepteur 24 détecte l'entretoise 12 et le moyen de déplacement 26 positionne le détecteur récepteur 24 au plus près.

Ensuite, le chapelet 22 des sources émettrices est introduit dans le premier tube 14. Il est déplacé par le moyen de déplacement 26 jusqu'à ce qu'une première source émettrice 30a soit détectée devant le détecteur récepteur 24. Le moyen de déplacement 26 déplace le chapelet 22 jusqu'à détecter une dernière source émettrice 30b devant le détecteur récepteur 24.

Le moyen de déplacement 26 sollicite légèrement le chapelet 22 aux extrémités de manière à ce que le chapelet 22 soit en position dans le cintre du premier tube 14. Le moyen de déplacement 26 immobilise le chapelet 22 de sources émettrices dans le cintre du premier tube 14. Les extrémités du chapelet 22 sont maintenues par le moyen de d'immobilisation du moyen de déplacement 26. Le moyen d'immobilisation exerce une sollicitation sur le filament 32 qui immobilise le chapelet 22 dans le cintre du premier tube 14. Les sources émettrices 30 sont disposées de manière sensiblement équidistante, contre l'intrados ou au centre du premier tube 14.

Le chapelet 22 de sources émettrices immobilisé dans le cintre du premier tube 14, le moyen de déplacement 26 du détecteur récepteur 24 entraîne ce dernier dans le cintre du second tube 16.

Le déplacement du détecteur récepteur 24 se fait à une vitesse sensiblement constante. Pendant l'étape d'enregistrement du signal recueilli par le détecteur 24 pendant son parcours, l'unité de contrôle 28 enregistre le signal comprenant la donnée physique de la source émettrice 30 permettant de calculer la distance entre la source émettrice 30 et le détecteur récepteur 24 et la donnée déductible issu de l'analyse de la donnée physique pour distinguer les sources émettrices 30 détectées. Au fur et à mesure du déplacement, la partie active 42 du détecteur récepteur mesure une variation de la donnée physique émise. Cette mesure, en fonction du chapelet 22 et du détecteur 24 correspondant, est soit une variation d'un champ magnétique, soit une variation d'un courant électrique induit. L'analyse de la variation de la donnée physique émise distingue les sources émettrices 30, les énumère et détermine la distance entre les sources émettrices 30 et le détecteur récepteur 24.

L'acquisition des mesures du signal est reproduite et répétée sur une distance de parcours prédéterminée. L'acquisition des mesures est renouvelée préférentiellement au moins une fois par millimètre parcouru, avantageusement plusieurs fois par millimètre parcouru.

Le procédé de mesure des jeux est renouvelé pour un échantillon comprenant quelques cintres ou pour l'ensemble des cintres 10 des faisceaux tubulaires de l'échangeur de chaleur 1.

Dans un premier mode de réalisation, le chapelet 22 de sources émettrices est un chapelet de corps conducteurs d'électricité. La donnée physique du chapelet 22 de sources émettrices est produite par un courant électrique formant un champ magnétique induit. Chaque source émettrice 30 est préférentiellement un alliage de cuivre, d'aluminium ou de tout autre matériau conducteur d'électricité.

La partie active 42 du détecteur récepteur 24 est un capteur de mesure du type sonde de mesure à courant de Foucault.

La grandeur mesurée du détecteur récepteur 24 est une variation d'un courant électrique induit désignant chacune des sources émettrices 30. Conjointement à l'examen du jeu entre cintres, la mesure du détecteur récepteur 24 opère avantageusement un examen de l'état de surface et de l'absence de fissure dans le second tube 16.

De plus, le procédé associé à ce premier mode de réalisation, de mesure des jeux entre des zones de tube d'échange de chaleur réalise conjointement un contrôle du jeu entre cintres, un contrôle de l'état de surface et une recherche de fissure pour le cintre du second tube 16.

Dans un second mode de réalisation, le chapelet 22 de sources émettrices est un chapelet d'aimants. La donnée physique du chapelet 22 de sources émettrices est un champ magnétique. Chaque source émettrice 30 est préférentiellement un alliage de néodyme fer bore ou encore tout autre matériau magnétique.

La partie active 42 du détecteur récepteur 24 est un capteur de mesure du type sonde de mesure à flux de fuite. La grandeur mesurée du détecteur récepteur 24 est une variation du champ magnétique désignant chacune des sources émettrices 30.

Le procédé de mesure des jeux entre cintres 10 contrôle de manière efficiente la distance entre les cintres 10 des faisceaux tubulaires de générateurs de vapeur 1. Le moyen de déplacement et de maintien en position 26 positionne de manière certaine par un maintien en tension, le chapelet 22 de sources émettrices dans le cintre du premier tube 14, assurant une mesure précise.

Le procédé de mesure permet également de déterminer les jeux aussi bien au stade final de fabrication qu'en service, en y associant une incertitude.

Le procédé de mesure des jeux entre cintres 10 propose une méthode de détermination de la distance entre cintres 10 depuis l'intérieur des cintres des tubes 14, 16, aussi bien avec une référence au centre du tube que sur l'intrados du tube.

Avantageusement, le procédé de mesure des jeux emploie des sources émettrices 30 ayant des caractéristiques identiques permettant d'obtenir une reproductibilité et une faible incertitude des mesures.

Le procédé de mesure des jeux est considéré comme un moyen de cartographier les distances entre cintres 10 pour l'ensemble des faisceaux tubulaires de l'échangeur de chaleur 1, dans un délai raisonnable.

Le procédé de mesure des jeux ne requiert aucune modification de l'échangeur de chaleur 1 pour pouvoir procéder au contrôle non destructif.

## Revendications

1. Procédé de mesure des jeux entre des zones de tubes d'échanges de chaleur d'un échangeur de chaleur (1), le procédé comprenant les étapes suivantes :
- engager dans ladite zone d'un premier tube (14) un chapelet (22) de sources émettrices ;
- faire circuler dans ladite zone d'un second tube (16) un détecteur récepteur (24) ;
- enregistrer le signal recueilli par le détecteur récepteur (24) pendant qu'il parcourt ladite zone du second tube (16) ;
- estimer l'écartement entre les zones respectives des premier (14) et second tubes (16) à partir du signal enregistré ;
**caractérisé en ce que** lesdites zones sont des cintres (10) agencés de telle sorte que ladite zone du cintre du premier tube (14) s'étende en vis-à-vis de ladite zone du cintre du second tube (16), deux extrémités opposées du chapelet (22) de sources émettrices étant sollicitées de manière à immobiliser le chapelet (22) de sources émettrices dans le cintre du premier tube (14) pendant la circulation du détecteur récepteur (24) dans le cintre du second tube (16).

2. Procédé de mesure selon la revendication 1, **caractérisé en ce que** lesdites zones des cintres des premier et second tubes (14, 16) s'étendent dans un même plan et sont sensiblement parallèles les unes aux autres.

3. Procédé de mesure selon la revendication 1 ou 2, **caractérisé en ce que** le chapelet (22) de sources émettrices est positionné de manière à plaquer le chapelet (22) de sources émettrices contre un intrados du cintre du premier tube (14).

4. Procédé de mesure selon la revendication 1 ou 2, **caractérisé en ce que** le chapelet (22) de sources émettrices comprend des centreurs (36) et le chapelet (22) de sources émettrices est positionné de manière à centrer le chapelet (22) de sources émettrices dans le cintre du premier tube (14).

5. Procédé de mesure selon l'une quelconque des revendications 1 à 4, **caractérisé en ce que** l'étape d'engagement du chapelet (22) de sources émettrices dans la zone du premier tube (14) comprend les opérations suivantes :
- introduire le détecteur récepteur (24) jusqu'à une entrée de la zone du cintre du second tube (16);
- introduire le chapelet (22) de sources émettrices dans le premier tube (14) ;
- déplacer le chapelet (22) jusqu'à détecter une première source émettrice (30a) devant le détecteur récepteur (24) ;
- déplacer le chapelet (22) jusqu'à détecter une dernière source émettrice (30b) devant le détecteur récepteur (24) ;
- solliciter le chapelet (22) pour l'immobiliser dans le premier tube (14).

6. Procédé de mesure selon l'une quelconque des revendications 1 à 5, **caractérisé en ce que** l'étape d'enregistrement du signal recueilli par le détecteur récepteur (24) pendant qu'il parcourt ladite zone du second tube (16) comprend une opération de mesure d'un signal comprenant une donnée physique permettant de calculer la distance entre la source émettrice (30) et le détecteur récepteur (24) et une donnée déductible de l'analyse des données physiques pour distinguer les sources émettrices (30) détectées.

7. Procédé de mesure selon la revendication 6, **caractérisé en ce que** l'étape d'enregistrement du signal comprend une opération reproduite et répétitive d'acquisition de mesures du signal, en effectuant préférentiellement au moins une acquisition de mesure par mm parcouru.

8. Procédé de mesure selon l'une quelconque des revendications 6 à 7, **caractérisé en ce que** le chapelet (22) de sources émettrices comprend une pluralité de sources émettrices (30) de forme identique, espacées d'une distance suffisante pour que la donnée physique émise par l'une des sources émettrices (30) n'interfère pas avec la donnée physique émise par l'autre des sources émettrices (30) lors de l'opération de mesure du signal.

9. Procédé de mesure selon la revendication 8, **caractérisé en ce que** chaque source émettrice (30) est composée d'un alliage de néodyme fer bore ou de tout autre matériau conducteur d'électricité ou de tout autre matériau magnétique.

10. Procédé de mesure selon la revendication 8 ou 9, **caractérisé en ce que** le chapelet (22) de sources émettrices comprend un filament (32) reliant les sources émettrices (30).

11. Procédé de mesure selon l'une quelconque des revendications 1 à 10, **caractérisé en ce que** l'étape de circulation du détecteur récepteur (24) dans ladite zone du second tube (16) comprend une opération de déplacement du détecteur récepteur (24) à vitesse sensiblement constante dans le second tube (16).

12. Procédé de mesure selon l'une quelconque des revendications 1 à 11, **caractérisé en ce que** le détecteur récepteur (24) comprend une partie active (42) avec un capteur de type sonde de mesure de courants de Foucault ou un capteur du type sonde de mesure du flux de fuite.

13. Procédé de mesure selon la revendication 12, **caractérisé en ce que** le détecteur récepteur (24) comprend une partie guidage et centrage (40) du détecteur récepteur par rapport au cintre du second tube (16).

14. Procédé de mesure selon l'une quelconque des revendications 1 à 13, **caractérisé en ce que** les cintres des premier et second tubes (14, 16) sont dans un plan vertical, le cintre du premier tube (14) se trouvant au-dessus ou en-dessous du second tube (16).

15. Ensemble de mesure (20) des jeux entre des zones de tubes d'échanges de chaleur d'un échangeur de chaleur (1) **caractérisé en ce qu'**il comprend :
- un chapelet (22) de sources émettrices propre à être engagé dans une zone d'un cintre d'un premier tube (14),
- un détecteur récepteur (24) propre à recevoir un signal transmis par le chapelet (22) de sources émettrices lors d'un parcours d'une zone d'un cintre d'un second tube (16), la zone du cintre du premier tube (14) s'étendant en vis-à-vis de la zone du cintre du second tube (16), et
- un moyen de déplacement et de maintien en position (26) du chapelet (22) de sources émettrices et du détecteur récepteur (24), propre à solliciter deux extrémités opposées du chapelet (22) de sources émettrices de manière à l'immobiliser dans le cintre du premier tube (14) pendant la circulation du détecteur récepteur (24) dans le cintre du second tube (16).

16. Ensemble de mesure (20) des jeux selon la revendication 15, **caractérisé en ce que** le chapelet (22) comprend une pluralité de sources émettrices (30) de forme identique, les sources émettrices (30) étant émettrices d'un signal comportant une donnée physique permettant de calculer la distance entre la source émettrice (30) et le détecteur récepteur (24) et une donnée déductible de l'analyse des données physiques pour distinguer les sources émettrices (30) détectées, espacées d'une distance suffisante pour que la donnée physique émise par l'une des sources émettrices (30) n'interfère pas avec la donnée physique émise par l'autre des sources émettrices (30), les sources émettrices (30) étant avantageusement reliées par un filament (32) et avantageusement positionnées sur l'intrados ou au centre du premier tube (14) au moyen d'un centreur (36).

17. Ensemble de mesure (20) des jeux selon la revendication 15 ou 16, **caractérisé en ce que** le détecteur récepteur (24) comprend une partie active (42) comprenant un capteur de type sonde de mesure de courant de Foucault ou du type sonde de mesure du flux de fuite.

18. Ensemble de mesure (20) des jeux selon la revendication 15 ou 16, **caractérisé en ce que** le détecteur récepteur (24) comprend une partie guidage et centrage (40) s'adaptant au diamètre du second tube (16).

## Patentansprüche

1. Verfahren zur Messung des Freispiels zwischen den Bereichen von Wärmetauschrohren eines Wärmetauschers (1), wobei das Verfahren die folgenden Schritte umfasst:
- in dem besagten Bereich eines ersten Rohrs (14) Einsetzen eines Strangs (22) von Emissionsquellen,
- in dem besagten Bereich eines zweiten Rohrs (16) Inumlaufbringen eines Empfänger-Detektors (24),
- Aufzeichnen des durch den Empfänger-Detektor (24) empfangenen Signals, während er den besagten Bereich des zweiten Rohres (16) durchläuft,
- Schätzung des Abstandes zwischen den jeweiligen Bereichen des ersten (14) und zweiten (16) Rohrs anhand des erfassten Signals,
**dadurch gekennzeichnet, dass** die besagten Bereiche Bögen (10) sind, dergestalt angeordnet, dass der besagte Bereich des Bogens des ersten Rohrs (14) sich gegenüber dem besagten Bereich des Bogens des zweiten Rohrs (16) erstreckt, wobei zwei entgegengesetzte Enden des Strangs (22) von Emissionsquellen derart vorgespannt werden, dass der Strang (22) von Emissionsquellen in dem Bogen des ersten Rohrs (14) immobilisiert wird, während der Empfänger-Detektor (24) im Bogen des zweiten Rohrs (16) zirkuliert.

2. Messverfahren nach Anspruch 1, **dadurch gekennzeichnet, dass** die besagten Bereiche der Bögen des ersten und zweiten Rohrs (14, 16) sich auf einer gleichen Ebene erstrecken und im Wesentlichen parallel zueinander sind.

3. Messverfahren nach Anspruch 1 oder 2, **dadurch gekennzeichnet, dass** der Strang (22) von Emissionsquellen derart positioniert ist, dass der Strang (22) von Emissionsquellen an einer Laibung des Bogens des ersten Rohrs (14) anliegt.

4. Messverfahren nach Anspruch 1 oder 2, **dadurch gekennzeichnet, dass** der Strang (22) von Emissionsquellen Zentrierer (36) umfasst und der Strang (22) von Emissionsquellen derart positioniert ist, dass der Strang (22) von Emissionsquellen in dem Bogen des ersten Rohrs (14) zentriert wird.

5. Messverfahren nach einem der Ansprüche 1 bis 4, **dadurch gekennzeichnet, dass** der Schritt zum Einsetzen des Strangs (22) von Emissionsquellen in dem Bereich des ersten Rohrs (14) die folgenden Vorgänge umfasst:
- Einführen des Empfänger-Detektors (24) bis in einen Eingang des Bereichs des Bogens des zweiten Rohrs (16),
- Einführen des Strangs (22) von Emissionsquellen in das erste Rohr (14),
- Verschieben des Strangs (22) bis zum Erfassen einer ersten Emissionsquelle (30a) vor dem Empfänger-Detektor (24),
- Verschieben des Strangs (22) bis zum Erfassen einer letzten Emissionsquelle (30b) vor dem Empfänger-Detektor (24),
- Beanspruchen des Strangs (22), um ihn in dem ersten Rohr (14) zu immobilisieren.

6. Messverfahren nach einem der Ansprüche 1 bis 5, **dadurch gekennzeichnet, dass** der Schritt zum Aufzeichnen des durch den Empfänger-Detektor (24) empfangenen Signals, während er den besagten Bereich des zweiten Rohrs (16) durchläuft, einen Vorgang zum Messen eines Signals umfasst, umfassend einen physikalischen Wert, der es ermöglicht, den Abstand zwischen der Emissionsquelle (30) und dem Empfänger-Detektor (24) zu berechnen, und einen aus der Analyse der physikalischen Daten ableitbaren Wert, um die erfassten Emissionsquellen (30) zu unterscheiden.

7. Messverfahren nach Anspruch 6, **dadurch gekennzeichnet, dass** der Schritt zum Aufzeichnen des Signals einen reproduzierten und sich wiederholenden Vorgang zur Erlangung von Messwerten des Signals umfasst, indem bevorzugt mindestens eine Messwerterlangung pro durchlaufenen mm ausgeführt wird.

8. Messverfahren nach einem der Ansprüche 6 bis 7, **dadurch gekennzeichnet, dass** der Strang (22) von Emissionsquellen eine Vielzahl von Emissionsquellen (30) von identischer Form umfasst, die in einem ausreichenden Abstand voneinander angeordnet sind, damit der von einer der Emissionsquellen (30) gesendete physikalische Wert nicht mit dem von der anderen der Emissionsquellen (30) während des Messvorgangs des Signals gesendeten physikalischen Wert interferiert.

9. Messverfahren nach Anspruch 8, **dadurch gekennzeichnet, dass** jede Emissionsquelle (30) zusammengesetzt ist aus einer Neodym-Eisen-Bor-Legierung oder aus jedem anderen elektrisch leitenden Material oder aus jedem anderen magnetischen Material.

10. Messverfahren nach Anspruch 8 oder 9, **dadurch gekennzeichnet, dass** der Strang (22) von Emissionsquellen ein Filament (32) umfasst, das die Emissionsquellen verbindet.

11. Messverfahren nach einem der vorstehenden Ansprüche 1 bis 10, **dadurch gekennzeichnet, dass** der Schritt zum Zirkulieren des Empfänger-Detektors (24) in dem besagtem Bereich des zweiten Rohrs (16) einen Vorgang zum Verschieben des Empfänger-Detektors (24) mit einer im Wesentlichen konstanten Geschwindigkeit in dem zweiten Rohr (16) umfasst.

12. Messverfahren nach einem der Ansprüche 1 bis 11, **dadurch gekennzeichnet, dass** der Empfänger-Detektor (24) einen aktiven Teil (42) mit einem Sensor vom Typ Wirbelstrom-Messsonde oder einen Sensor vom Typ Streufluss-Messsonde umfasst.

13. Messverfahren nach Anspruch 12, **dadurch gekennzeichnet, dass** der Empfänger-Detektor (24) einen Führungs- und Zentrierteil (40) des Empfänger-Detektors in Bezug auf den Bogen des zweiten Rohrs (16) umfasst.

14. Messverfahren nach einem der Ansprüche 1 bis 13, **dadurch gekennzeichnet, dass** die Bögen des ersten und zweiten Rohrs (14, 16) in einer vertikalen Ebene liegen, wobei der Bogen des ersten Rohrs (14) sich über oder unter dem zweiten Rohr (16) befindet.

15. Messeinheit (20) des Freispiels zwischen den Bereichen von Wärmetauschrohren eines Wärmetauschers (1), **dadurch gekennzeichnet, dass** sie umfasst:
- einen Strang (22) von Emissionsquellen, der geeignet ist, in einen Bereich eines Bogens eines ersten Rohrs (14) eingesetzt zu werden,
- einen Empfänger-Detektor (24), der geeignet ist, ein Signal zu empfangen, das durch den Strang (22) von Emissionsquellen während eines Durchlaufens eines Bereichs eines Bogens eines zweiten Rohrs (16) übertragen wird, wobei sich der Bereich des Bogens des ersten Rohrs (14) gegenüber dem Bereich des Bogens des zweiten Rohrs (16) erstreckt, und
- ein Mittel zum Verschieben und zum Halten in Position (26) des Strangs (22) von Emissionsquellen und des Empfänger-Detektors (24), das geeignet ist, zwei entgegengesetzte Enden des Strangs (22) von Emissionsquellen derart vorzuspannen, dass er im Bogen des ersten Rohrs (14) immobilisiert wird, während der Empfänger-Detektor (24) im Bogen des zweiten Rohrs (16) zirkuliert.

16. Messeinheit (20) des Freispiels nach Anspruch 15, **dadurch gekennzeichnet, dass** der Strang (22) eine Vielzahl von Emissionsquellen (30) von identischer Form umfasst, wobei die Emissionsquellen (30) Sender eines Signals sind, das einen physikalischen Wert umfasst, der es erlaubt, den Abstand zwischen der Emissionsquelle (30) und dem Empfänger-Detektor (24) zu berechnen, und einen aus der Analyse der physikalischen Daten ableitbaren Wert zur Unterscheidung der erfassten Emissionsquellen (30), die in einem ausreichenden Abstand voneinander angeordnet sind, damit der von einer der Emissionsquellen (30) gesendete physikalische Wert nicht mit dem von der anderen der Emissionsquellen (30) gesendeten physikalischen Wert interferiert, wobei die Emissionsquellen (30) bevorzugt durch ein Filament (32) verbunden sind und bevorzugt an der Laibung oder in der Mitte des ersten Rohrs (14) mittels eines Zentrierers (36) positioniert werden.

17. Messeinheit (20) des Freispiels nach Anspruch 15 oder 16, **dadurch gekennzeichnet, dass** der Empfänger-Detektor (24) einen aktiven Teil (42) umfasst, umfassend einen Sensor vom Typ Wirbelstrom-Messsonde oder vom Typ Streufluss-Messsonde.

18. Messeinheit (20) des Freispiels nach Anspruch 15 oder 16, **dadurch gekennzeichnet, dass** der Empfänger-Detektor (24) einen Führungs- und Zentrierteil (40) umfasst, der sich an den Durchmesser des zweiten Rohrs (16) anpasst.

## Claims

1. A method for measuring clearances between zones of heat exchange tubes of a heat exchanger (1), the method comprising the following steps:
- engaging a string (22) of emitter sources in said zone of a first tube (14);
- circulating a receiver detector (24) in said zone of a second tube (16);
- recording the signal picked up by the receiver detector (24) as it travels said zone of the second tube (16);
- estimating the spacing between the respective zones of the first (14) and second (16) tubes from the recorded signal;
**characterized in that** said zones are bows (10) arranged such that said zone of the bow of the first tube (14) extends facing said zone of the bow of the second tube (16), two opposite ends of the string (22) of emitter sources being acted upon so as to immobilize the string (22) of emitter sources in the bow of the first tube (14) during the circulation of the receiver detector (24) in the bow of the second tube (16).

2. The measuring method according to claim 1, **characterized in that** said zones of the bows of the first and second tubes (14, 16) extend in a same plane and are substantially parallel to one another.

3. The measuring method according to claim 1 or 2, **characterized in that** the string (22) of emitter sources is positioned so as to press the string (22) of emitter sources against a concave side of the bow of the first tube (14).

4. The measuring method according to claim 1 or 2, **characterized in that** the string (22) of emitter sources comprises centering devices (36) and the string (22) of emitter sources is positioned so as to press the string (22) of emitter sources in the center of the bow of the first tube (14).

5. The measuring method according to any one of claims 1 to 4, **characterized in that** the step for engaging the string (22) of emitter sources in the zone of the first tube (14) comprises the following operations:
- inserting the receiver detector (24) up to an inlet of the zone of the bow of the second tube (16);
- inserting the string (22) of emitter sources into the first tube (14);
- moving the string (22) until a first emitter source (30a) is detected in front of the receiver detector (24);
- moving the string (22) until a last emitter source (30b) is detected in front of the receiver detector (24);
- acting on the string (22) of emitter sources to immobilize it in the first tube (14).

6. The measuring method according to any one of claims 1 to 5, **characterized in that** the step for recording the signal collected by the receiver detector (24) while it travels through said zone of the second tube (16) comprises an operation for measuring a signal comprising a physical datum making it possible to calculate the distance between the emitter source (30) and the receiver detector (24) and a datum able to be deduced from the analysis of the physical data to distinguish the detected emitter sources (30).

7. The measuring method according to claim 6, **characterized in that** the step for recording the signal comprises a reproduced and repetitive operation for acquiring measurements of the signal, preferably performing at least one measurement acquisition per mm traveled.

8. The measuring method according to any one of claims 6 to 7, **characterized in that** the string (22) of emitter sources comprises a plurality of emitter sources (30) with an identical shape, spaced apart by a sufficient distance for the physical datum emitted by one of the emitter sources (30) not to interfere with the physical datum emitted by the other of the emitter sources (30) during the operation for measuring the signal.

9. The measuring method according to claim 8, **characterized in that** each emitter source (30) is made from a neodyme-iron-boron alloy or any other electrically conducting material or any other magnetic material.

10. The measuring method according to claim 8 or 9, **characterized in that** the string (22) of emitter sources comprises a filament (32) connecting the emitter sources (30).

11. The measuring method according to any one of claims 1 to 10, **characterized in that** the step for circulation of the receiver detector (24) in said zone of the second tube (16) comprises an operation for moving the receiver detector (24) at a substantially constant speed in the second tube (16).

12. The measuring method according to any one of claims 1 to 11, **characterized in that** the receiver detector (24) comprises an active part (42) with a probe of the type sensor for measuring Foucault currents or a probe of the type sensor for measuring the leakage flux.

13. The measuring method according to claim 12, **characterized in that** the receiver detector (24) comprises a part (40) for guiding and centering the receiver detector relative to the bow of the second tube (16).

14. The measuring method according to any one of claims 1 to 13, **characterized in that** the bows of the first and second tubes (14, 16) are in a vertical plane, the bow of the first tube (14) being located above or below the second tube (16).

15. An assembly (20) for measuring clearances between zones of heat exchange tubes of a heat exchanger (1), **characterized in that** it comprises:
- a string (22) of emitter sources able to be engaged in a zone of a bow of a first tube (14),
- a receiver detector (24) able to receive a signal sent by the string (22) of emitter sources during travel from a zone of a bow of a second tube (16), the zone of the bow of the first tube (14) extending facing the zone of the bow of the second tube (16), and
- a means (26) for moving and maintaining the string (22) of emitter sources and the receiver detector (24) in position, able to act on two opposite ends of the string (22) of emitter sources so as to immobilize it in the bow of the first tube (14) while the receiver detector (24) is circulating in the bow of the second tube (16).

16. The assembly (20) for measuring clearances according to claim 15, **characterized in that** the string (22) of emitter sources comprises a plurality of emitter sources (30) with an identical shape, the emitter sources (30) emitting a signal including a physical datum making it possible to calculate the distance between the emitter source (30) and the receiver detector (24) and a datum able to be deduced from the analysis of the physical data to distinguish the detected emitter sources (30), spaced apart by a sufficient distance for the physical datum emitted by one of the emitter sources (30) not to interfere with the physical datum emitted by the other of the emitter sources (30), the emitter sources (30) advantageously being connected by a filament (32) and advantageously positioned on the concave side or at the center of the first tube (14) using a centering device (36).

17. The assembly (20) for measuring clearances according to claim 15 or 16, **characterized in that** the receiver detector (24) comprises an active part (42) comprising a probe of the type sensor for measuring Foucault currents or a probe of the type sensor for measuring the leakage flux.

18. The assembly (20) for measuring clearances according to claim 15 or 16, **characterized in that** the receiver detector (24) comprises a part (40) for guiding and centering adapting to the diameter of the second tube (16).
